# EUROPÄISCHE PATENTSCHRIFT

(11) **EP 3 132 966 B1**
(45) Veröffentlichungstag und Bekanntmachung des Hinweises auf die Patenterteilung: **07.08.2024**
(21) Anmeldenummer: 16167305.8
(22) Anmeldetag: 27.04.2016
(51) Int. Cl.: B60K 1/02, B60K 17/356, B60W 10/08, B60W 30/188, B60L 15/20, B60W 50/00

(54) **VERFAHREN ZUM BETREIBEN EINES FAHRZEUGES SOWIE FAHRZEUG**
METHOD FOR OPERATING A VEHICLE AND VEHICLE
PROCÉDÉ DESTINÉ AU FONCTIONNEMENT D'UN VÉHICULE AINSI QUE VÉHICULE

(30) Priorität: 21.08.2015 EP 15181983
(43) Veröffentlichungstag der Anmeldung: 22.02.2017
(73) Patentinhaber: MAGNA STEYR Fahrzeugtechnik GmbH & Co KG, 8041 Graz (AT)
(72) Erfinder: MARTIN, Michael, 8047 Graz (AT)
(74) Vertreter: Zangger, Bernd

(56) Entgegenhaltungen:
- EP-A2- 0 622 264
- EP-A2- 2 444 273
- DE-A1- 102010 020 906
- DE-T5- 112012 006 106
- US-A1- 2013 173 100

## Beschreibung

### Gebiet der Erfindung

Die vorliegende Erfindung betrifft ein Verfahren zum Betreiben eines Fahrzeuges, wobei das Fahrzeug zumindest einen ersten und einen zweiten Elektromotor als Antriebsmotoren aufweist.

### Stand der Technik

Derartige Fahrzeuge können insbesondere so aufgebaut sein, dass durch den ersten Elektromotor eine Vorderachse des Fahrzeuges antreibbar ist und durch den zweiten Elektromotor eine Hinterachse des Fahrzeuges antreibbar ist.

Fahrzeuge mit elektrischem Antrieb (Batterieelektrisch, Brennstoffzelle, Serieller Hybrid) werden primär an einer Achse mittels eines Elektromotors angetrieben. Wie auch bei konventionell betriebenen Fahrzeugen wird zukünftig aber der Bedarf von allradgetriebenen Antriebsträngen aufgrund der besseren Traktion (Beschleunigung, Steigfähigkeit) steigen.

Ein mechanischer Allrad-Aufbau ist aufgrund des schlechten Wirkungsgrades und des notwendigen Bauraumes wenig geeignet für elektrisch angetriebene Fahrzeuge. Da elektrische Antriebe mittels Stromkabel verbunden werden besteht keine zwangsweise mechanische Verbindung (Gelenkwellen) zwischen Vorderachse und Hinterachse. Die beiden Achsen sind somit unabhängig voneinander und können individuell konfiguriert werden.

Ein Fahrzeug mit zwei Elektromotoren als Antriebsmotoren kann daher so aufgebaut sein, dass durch den ersten Elektromotor eine Vorderachse des Fahrzeuges antreibbar ist und durch den zweiten Elektromotor eine Hinterachse des Fahrzeuges antreibbar ist.

Die DE 11 2012 006106 T5 lehrt eine Steuervorrichtung eines Fahrzeugs mit einem ersten Elektromotor, der ein Startmoment für einen Maschinenstart ausgibt, einem zweiten Elektromotor, der mit Rädern gekoppelt ist, und einer Elektrospeichervorrichtung, die elektrische Energie zu/von jeweils dem ersten und zweiten Elektromotor zuführt/empfängt, wobei die Steuervorrichtung eines Fahrzeugs konfiguriert ist, um eine Motorfahrt durch einen Motor unter Verwendung nur des zweiten Elektromotors, eine Motorfahrt durch zwei Motoren unter Verwendung des ersten Elektromotors und des zweiten Elektromotors, und eine Maschinenfahrt unter Verwendung einer Antriebskraftquelle umfassend die Maschine auszuwählen, wobei eine Ladungskapazität der Elektrospeichervorrichtung, die eine Auswahl der Motorfahrt durch zwei Motoren zulässt, höher ist als eine Ladungskapazität der Elektrospeichervorrichtung, die eine Auswahl der Motorfahrt durch einen Motor zulässt.

Die EP 0 622 264 A2 offenbart in einem Elektrofahrzeug, in dem die Gleichstromleistung der im Fahrzeug montierten Batterie verstärkt und an zwei oder mehr Motoren geliefert wird, und die Räder durch das Drehmoment von zwei oder mehr Motoren angetrieben werden, um das Fahrzeug anzutreiben, ein elektrisches Fahrzeug-Antriebssystem, wobei die zwei oder mehr Motoren mindestens zwei verschiedene Arten von Motoren umfassen, und das System mit der Steuereinrichtung versehen ist, um den Anteil der Fahrzeug-Antriebskraft, der von jedem der Motoren zu erzeugen ist, in Übereinstimmung mit dem Fahrzustand des Fahrzeugs einzustellen.

### Zusammenfassung der Erfindung

Es ist eine Aufgabe der Erfindung, ein Verfahren zum Betreiben eines Fahrzeuges der genannten Art anzugeben, dass einen ökonomischen Betrieb beider Elektromotoren gewährleistet und ein Fahrzeug, dass für ein solches Verfahren vorbereitet ist.

Die Lösung der Aufgabe erfolgt durch ein Verfahren zum Betreiben eines Fahrzeuges, wobei das Fahrzeug zumindest einen ersten und einen zweiten Elektromotor aufweist, wobei durch den ersten Elektromotor eine Vorderachse des Fahrzeuges antreibbar ist und durch den zweiten Elektromotor eine Hinterachse des Fahrzeuges antreibbar ist, wobei der erste und der zweite Elektromotor mit einem von einem Kennfeld abhängigen Drehmoment betrieben werden, wobei das Kennfeld in Abhängigkeit von einem Fahrerwunschmoment und einer Fahrzeuggeschwindigkeit abgegrenzte Bereiche definiert, mit voneinander diskontinuierlich verschiedenen Drehmomentverteilungen für den ersten und den zweiten Elektromotor, wobei das Kennfeld zumindest drei Bereiche definiert, wobei in einem ersten Bereich ausschließlich der erste Elektromotor aktiviert ist und in einem zweiten Bereich ausschließlich der zweite Elektromotor aktiviert ist und in einem dritten Bereich beide Elektromotoren aktiviert sind, wobei wenn ein Motor deaktiviert wird, dieser mittels Kupplung vom Antriebsstrang getrennt wird, so dass eine nicht angetriebene Achse ausgekuppelt ist und vom Antriebsstrang getrennt ist, so dass im ersten Bereich ausschließlich die Vorderachse angetrieben wird, im zweiten Bereich ausschließlich die Hinterachse angetrieben wird, im dritten Bereich beide Achsen angetrieben werden.

Hierdurch kann ein Betrieb des Fahrzeuges mit besserem Gesamtsystem-Wirkungsgrad durch Realisierung eines ausgewählten Bereichs des Kennfeldes erreicht werden, abhängig von der aktuellen Fahrzeuggeschwindigkeit und dem aktuellen Fahrerwunschmoment.

Erfindungsgemäß wird zum Betreiben eines Fahrzeuges ein Kennfeld verwendet, das auf Achsen mit den Eingangsparametern Fahrerwunschmoment und Fahrzeuggeschwindigkeit mehrere abgegrenzte Bereiche verschiedener Systemkonfigurationen und/oder Drehmomente beschreibt. Die verschiedenen Bereiche unterscheiden sich darin, dass in den Bereichen verschiedene Elektromotoren aktiviert bzw. deaktiviert sind oder dass allgemeiner die Drehmomentverteilung verschiedener Bereiche jedenfalls diskontinuierlich verschieden voneinander ist, beispielsweise in einem Bereich eine Drehmomentverteilung von 50:50 auf die beiden Motoren und in einem angrenzenden Bereich des Kennfeldes eine Drehmomentverteilung von 70:30. Die im Kennfeld definierte "Drehmomentverteilung" umfasst auch ein unterschiedliches Drehmoment das dadurch erreicht wird, dass ein Motor deaktiviert wird, nämlich mittels Kupplungen vom Antriebsstrang getrennt wird, so dass er ein Drehmoment von Null zum Antrieb des Fahrzeuges beitragen kann.

Das Fahrerwunschmoment kann vom Fahrer insbesondere durch Betätigen eines Pedals, beispielsweise eines Gaspedals oder Fahrpedals, vorgegeben werden.

Ein erfindungsgemäß betriebenes Fahrzeug bietet durch das Nutzen diskontinuierlicher Übergänge zwischen verschiedenen Systemzuständen bzw. Betriebsmoden der Elektromotoren die Möglichkeit einer wirkungsgrad-optimierten Drehmomentverteilung, abhängig vom Fahrerwunsch und von der Fahrzeuggeschwindigkeit.

Es können die Systemzustände und die Drehmomentverteilung stets so gewählt werden, dass das Fahrzeug den besten Gesamtwirkungsgrad hat. Die erfindungsgemäße Lösung kann dabei Offline-Optimierung nutzen, da das Kennfeld im Vorhinein für ein Fahrzeug bzw. einen Fahrzeugtyp festgelegt werden kann. Ferner können vorausschauende Systeme und/oder eine Zustandsüberwachung der Komponenten des Fahrzeuges im Verfahren berücksichtigt werden.

Erfindungsgemäß definiert das Kennfeld zumindest drei Bereiche, wobei in einem ersten Bereich ausschließlich der erste Elektromotor aktiviert ist und in einem zweiten Bereich ausschließlich der zweite Elektromotor aktiviert ist und in einem dritten Bereich beide Elektromotoren aktiviert sind, insbesondere beide Elektromoren annähernd gleiches Drehmoment liefern. Im ersten Bereich ist daher ausschließlich die Vorderachse angetrieben, im zweiten Bereich ist ausschließlich die Hinterachse angetrieben, im dritten Bereich können beide Achsen angetrieben sein. Zumindest zwei der drei Bereiche können im Kennfeld unmittelbar aneinander angrenzen, bevorzugt grenzen alle mindestens drei Bereiche unmittelbar an jeden der beiden anderen Bereiche im Kennfeld an. Die Anzahl der definierten Bereiche kann von den Wirkungsgradeigenschaften der Fahrzeugkomponenten abhängen. Es müssen jedoch insgesamt mindestens drei Bereiche definiert sein. Das Aktivierungsdrehmoment der beiden Motoren kann auch bei Aktivierung beider Motoren verschieden sein, wenn beispielsweise je Achse unterschiedliche Gänge in den je Achse vorgeschalteten Mehrganggetrieben eingelegt sind, oder die Übersetzungen der je Motor nachgeschalteten Mehrganggetriebe unterschiedlich ist oder die einzige Übersetzung vom ersten Motor und vom zweiten Motor auf die jeweilige Antriebsachse jeweils verschieden ist.

Bevorzugt wird unterhalb eines vorgegebenen geringen Fahrerwunschmoments, bei geringer Fahrzeuggeschwindigkeit der erste Bereich realisiert, in dem der erste Elektromotor aktiviert ist und bei mittlerer Fahrzeuggeschwindigkeit der zweite Bereich realisiert, in dem der zweite Elektromotor aktiviert ist und bei großer Fahrzeuggeschwindigkeit der dritte Bereich realisiert, in dem der erste und der zweite Elektromotor aktiviert sind. Bei geringer Fahrzeuggeschwindigkeit kann daher ausschließlich die Vorderachse angetrieben sein, bei mittlerer Fahrzeuggeschwindigkeit kann ausschließlich die Hinterachse angetrieben sein, bei hoher Fahrzeuggeschwindigkeit können beide Achsen angetrieben sein.

Oberhalb eines vorgegebenen großen Fahrerwunschmoments wird vorzugsweise bei jeder Fahrzeuggeschwindigkeit der dritte Bereich realisiert, in dem der erste und der zweite Elektromotor aktiviert sind.

Erfindungsgemäß wird zumindest ein Übergang zwischen Bereichsgrenzen des Kennfeldes dadurch realisiert, dass ein Elektromotor an- bzw. ausgeschaltet wird und dass ein Elektromotor vom Antriebsstrang ein- bzw. ausgekoppelt wird. Vorzugsweise wird zumindest ein Übergang zwischen Bereichsgrenzen des Kennfeldes dadurch realisiert, dass ein Elektromotor auf ein neues Betriebsdrehmoment gesetzt wird und/oder dass eine Änderung des Ganges eines Schaltgetriebes erfolgt. Insbesondere kann bei Überschreiten einer Grenze zwischen zwei Bereichen des Kennfeldes also ein Elektromotor ganz deaktiviert werden. Eine nicht angetriebene Achse wird dabei erfindungsgemäß ausgekuppelt und vom Antriebsstrang getrennt. Die diskontinuierlich verschiedenen Drehmomentverteilungen können auch durch verschiedene Gänge eines Getriebes realisiert sein. Besonders bevorzugt wird der Bereich des Betriebes des ersten und/oder zweiten Elektromotors abhängig von dem Kennfeld nur dann geändert, wenn eine zusätzliche Plausibilitätsprüfung positiv ausfällt. Das Kennfeld wird somit mehrdimensional. Diskrete Übergänge an den Bereichsgrenzen (z.B. offen / zu einer Kupplung, Aktivieren / Deaktivieren eines Motors) sind meist mit Fahrbarkeitseinbußen verbunden, gerade wenn es zu einem zu häufigen Zustandswechsel kommen würde. Dieses Problem kann daher reduziert werden wenn die Bereichswechsel zur Optimierung des Wirkungsgrades nur "gebremst" ausgeführt werden, so dass beispielsweise eine nur kurzzeitige Überschreitung einer Grenze nicht notwendigerweise eine Änderung des Systemzustandes bewirken muss.

Die zusätzliche Plausibilitätsprüfung kann eine Hysterese des Fahrerwunschmomentes des Kennfeldes darstellen, wobei die Hysterese sowohl bei Überschreitungen als auch bei Unterschreitungen einer Bereichsgrenze wirksam sein kann.

Die zusätzliche Plausibilitätsprüfung kann eine zeitliche Vorausschau beinhalten. Die zeitliche Vorausschau kann zum Beispiel durch die Verwendung von externen Informationen wie GPS-Informationen über die vorgesehene Route und/oder durch Analyse der Fahrzeugumgebung, zum Beispiel durch Verkehrsschilderkennung, ADAS Sensoren und/oder durch Analyse von Fahrzeugdaten wie Steigungssensoren, Lenkwinkelsensoren etc erfolgen.

Die zusätzliche Plausibilitätsprüfung kann einen Wirkungsgradvergleich beinhalten zwischen einem Wirkungsgrad bei Änderung des Bereiches des Kennfeldes und einem Wirkungsgrad ohne Änderung des Bereiches des Kennfeldes.

Vorzugsweise berücksichtigt die zusätzliche Plausibilitätsprüfung ein Derating des ersten und/oder zweiten Elektromotors. "Derating" bezeichnet die Gefahr einer Überhitzung eines elektrischen oder elektronischen Bauteils abhängig von dessen maximal zulässiger Verlustleistung und von seiner Umgebungs- und Komponententemperatur. Ein erfindungsgemäßes Verfahren berücksichtigt daher bevorzugt den Derating-Einfluss von HV (Hochvolt) Komponenten. Die Drehmomentverteilung wird beispielsweise dann geändert, wenn ein Motor droht in das Derating zu kommen. Ein erfindungsgemäßes Fahrzeug weist vorzugsweise zumindest einen ersten und einen zweiten Elektromotor auf, wobei durch den ersten Elektromotor eine Vorderachse des Fahrzeuges antreibbar ist und durch den zweiten Elektromotor eine Hinterachse des Fahrzeuges antreibbar ist, wobei das Fahrzeug eine Steuereinheit umfasst, wobei die Steuereinheit dazu eingerichtet ist, ein erfindungsgemäßes Verfahren wie beschrieben auszuführen.

### Kurzbeschreibung der Zeichnungen

Die Erfindung wird im Folgenden beispielhaft unter Bezugnahme auf die Zeichnungen beschrieben.
- Fig. 1: zeigt schematisch grundlegende Möglichkeiten eines elektrischen Antriebs für ein Fahrzeug.
- Fig. 2: zeigt eine übliche Verteilung von Wirkungsgrad und Betriebspunkten eines Elektromotors.
- Fig. 3: zeigt verschiedene Konfigurationen eines elektrischen allradgetriebenen Fahrzeuges.
- Fig. 4: zeigt verschiedene Architekturen für einen Elektromotor.
- Fig. 5: zeigt eine erfindungsgemäß verbesserte Verteilung von Wirkungsgrad und Betriebspunkten eines Elektromotors.
- Fig. 6: zeigt beispielhaft eine Kennlinie mit drei abgegrenzten Bereichen eines erfindungsgemäßen Verfahrens.
- Fig. 7: zeigt eine weitere Kennlinie mit drei abgegrenzten Bereichen eines erfindungsgemäßen Verfahrens mit Hysterese.
- Fig. 8: zeigt schematisch eine Auswahl möglicher Zustände bzw. Bereiche in einem erfindungsgemäßen Verfahren.
- Fig. 9: zeigt oben eine Kennlinie 1 mit Systemzuständen und unten eine Kennlinie 2 mit Drehmomentverteilungen jeweils in einem global optimalen Zustand.
- Fig. 10: zeigt eine Kennlinie 3 mit GesamtsystemWirkungsgraden in einem global optimalen Zustand.
- Fig. 11: zeigt verschiedene mögliche Systemzustände für Fahrzeuge mit verschiedenen Kupplungen und Getrieben.
- Fig. 12: zeigt oben eine Kennlinie 2 mit Drehmomentverteilungen und unten eine Kennlinie 3 mit Wirkungsgraden jeweils in einem aktuell optimalen Zustand, in dem beispielsweise alle Kupplungen geschlossen sind.
- Fig. 13: zeigt ein Ablaufschema zur Wahl der optimalen Drehmomentverteilung und gegebenenfalls der Zustandsänderung von Kupplungen / Gängen.
- Fig. 14: zeigt ein Ablaufschema zur möglichen Koppelung mit einer vorausschauenden Betriebsstrategie für die Ansteuerung der Kupplungen und der Drehmomentverteilung.
- Fig. 15: zeigt eine Detaildarstellung zur Wirkungsgradoptimierung gemäß Block (1) der Fig. 14.
- Fig. 16: zeigt eine Detaildarstellung zur Leistungs- bzw. Derating-Optimierung gemäß Block (2) der Fig. 14.
- Fig. 17: zeigt ein Ablaufschema zur Berücksichtigung von Derating in einem erfindungsgemäßen Verfahren.
- Fig. 18: zeigt schematisch mögliche Module zur Umsetzung eines erfindungsgemäßen Verfahrens.

### Detaillierte Beschreibung der Erfindung

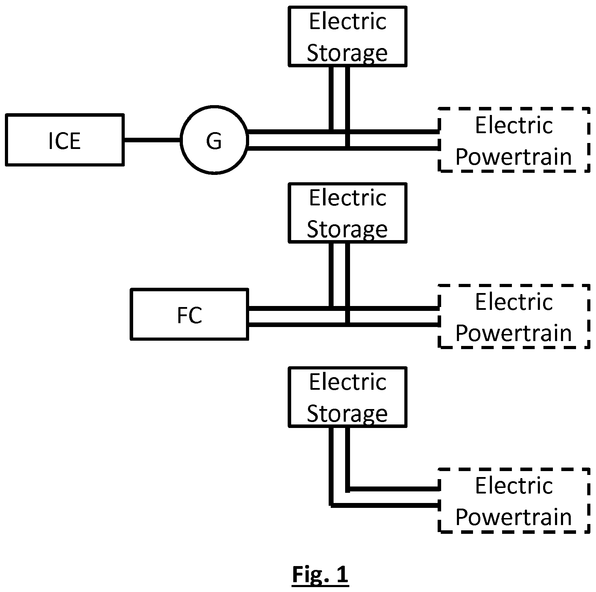

In Fig. 1 sind grundlegende Möglichkeiten eines elektrischen Antriebs für ein Fahrzeug dargestellt.

Ein elektrisch angetriebenes Fahrzeug wird mittels eines oder mehrerer Elektromotoren und optional über ein- oder mehrstufige Getriebe angetrieben. Die Energie kann hierbei nur von einer Batterie (Electric Storage) als Batterie-elektrisches Fahrzeug (Abbildung unten in Fig. 1), von einer Brennstoffzelle (FC) als Brennstoffzellenfahrzeug (Abbildung mitte in Fig. 1) oder von einem Verbrennungsmotor (ICE) und einem Generator (G) in Form eines seriellen Hybrid (Abbildung oben in Fig. 1), sowie Kombinationen dieser Möglichkeiten, bereitgestellt werden.

Elektromotoren haben je nach Auslegung und Typ meist ihr Wirkungsgradoptimum und ihren Nennwirkungsgrad im mittleren bis hohen Drehzahlbereich sowie bei Teil- bis Volllast.

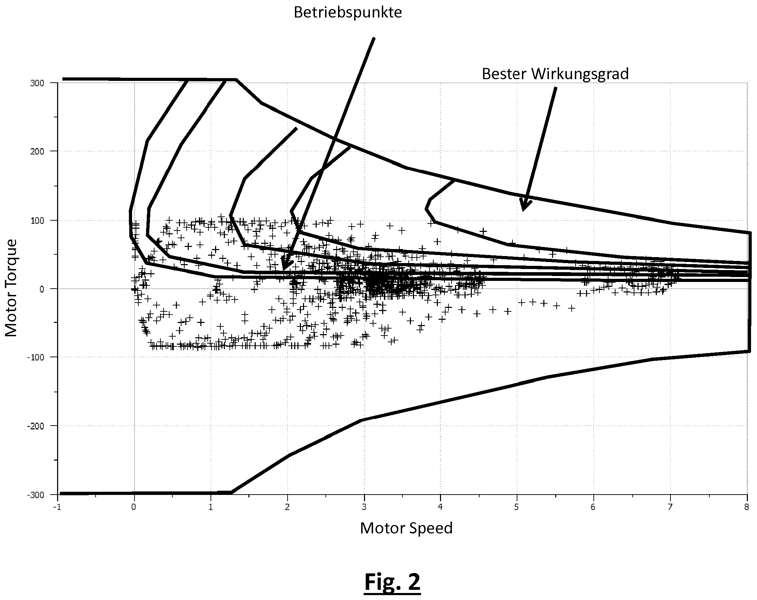

Aufgrund der relativ niedrigen Lastanforderung in den gesetzlichen Fahrzyklen liegen die Betriebspunkte meist nicht in diesem Wirkungsgradoptimum. Siehe hierzu Fig. 2.

Wie zu sehen, sind diese Betriebspunkte in den Fahrzyklen meist bei unterer Teillast (Drehmoment, Motor Torque) sowie gerade im Stadtbetrieb bei niedrigen Drehzahlen (Motor Speed). Da die Elektromotoren starr über eine Getriebeübersetzung fest mit dem Rad verbunden sind und damit die Geschwindigkeit proportional zur Raddrehzahl sowie die Zugkraftanforderung des Fahrers proportional zum Drehmoment ist, ergibt sich keine Möglichkeit diese Betriebspunkte zu verbessern, sofern kein schaltbares Getriebe vorhanden ist.

Hier bietet es Vorteile einen elektrischen Allrad zu verwenden, also Elektroantriebe an Vorder- und Hinterachse, und das maximale Drehmoment / die maximale Leistung auf mehrere Motoren aufzuteilen. Die einzelnen Motoren können damit kleiner dimensioniert werden.

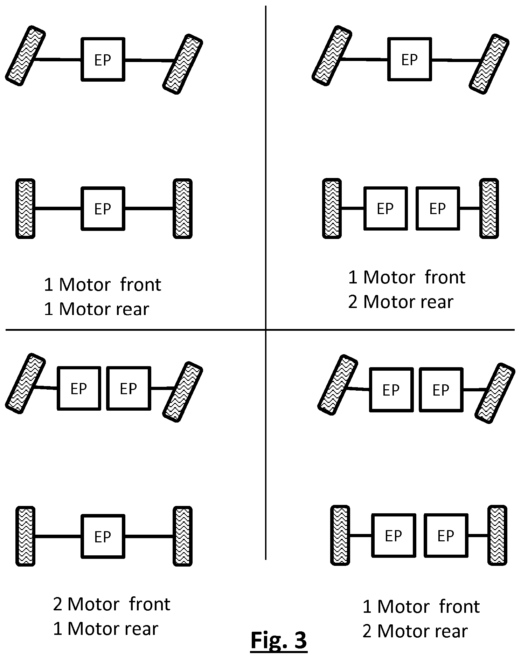

Ein elektrischer Allrad kann durch die in Fig. 3 dargestellten vier Konfigurationen von 2 bis 4 elektrischen Antrieben definiert sein. Dargestellt sind jeweils die Vorder- und die Hinterachse für jede Konfiguration. Dabei ist EP (Electric Propulsion Unit) ein Elektromotor.

Die Möglichkeiten reichen also von einem Motor pro Achse, über Differential gekoppelt zu den beiden Rädern, bis zu je einem einzelnen Elektromotor pro Rad (radnah oder Radnabe).

Dabei sind für jede Antriebseinheit (EP) für jede Achse zusätzlich verschiedene Architekturen möglich. Diese haben Einfluss auf die Betriebsstrategie bzw. Effizienz des Fahrzeuges.

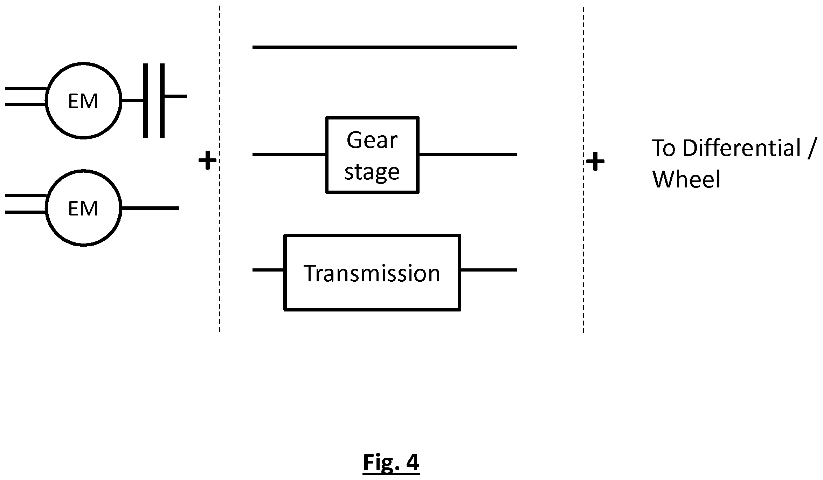

Verschiedene Architekturen für einen Elektromotor (EM) sind in Fig. 4 gezeigt.

Bezüglich Kupplung gibt es zumindest die Möglichkeiten (Fig. 4, links):
- Nicht erfindungsgemäß: Keine Kupplung vorhanden (elektrischer Antrieb kann nicht vom Rad getrennt werden, Schleppmoment des Antriebes erhöht bei Nicht-Verwendung des EM den Fahrwiderstand)
- Erfindungsgemäß: Mit Kupplung (elektrischer Antrieb kann vom Rad getrennt werden, kein Schleppmoment an der Achse bei NichtVerwendung).

Bezüglich Getriebe gibt es zumindest die Möglichkeiten (Fig. 4, mitte):
- Kein Getriebe (Motor ist direkt mit einem Rad verbunden)
- Getriebeübersetzung (Elektromotor ist mit einer fixen Getriebeübersetzung an das Rad verbunden)
- Mehr-Ganggetriebe (Anpassung Lastpunkt durch Getriebe ist möglich, zusätzlich kann je nach Bauart ebenfalls eine Entkoppelungsfunktion realisiert sein, also kein Schleppmoment am Rad bei Nicht-Verwendung des Motor anliegen).

Der Antrieb kann mit einem Differential verbunden sein, oder direkt mit einem Rad des Fahrzeuges (Fig. 4, rechts).

Ein elektrischer Allrad heißt zudem, dass die Drehmomentverteilung frei ist. Es kann mit beiden Achsen oder es kann nur mit einer Achse gefahren werden, insbesondere je nach Drehmomentanforderung des Fahrers. Das heißt bei geringer Last / Teillast kann nur mit einer Achse gefahren werden. Da die einzelnen Motoren kleiner dimensioniert werden (Gesamtantriebsleistung aller Motoren bleibt gleich zum Ein-Achs-Antriebskonzept) führt dies damit automatisch zu einer Lastpunktanhebung. Die kleiner dimensionierte Achse fährt in Relation bei höherer Last und damit einen besseren Wirkungsgrad. Dies führt zu einer Verbesserung der Reichweite und Effizienz bei Vergleich eines erfindungsgemäßen Fahrzeugs mit Allrad und mehreren Motoren und eines Fahrzeuges mit einem einzigen Elektromotor.

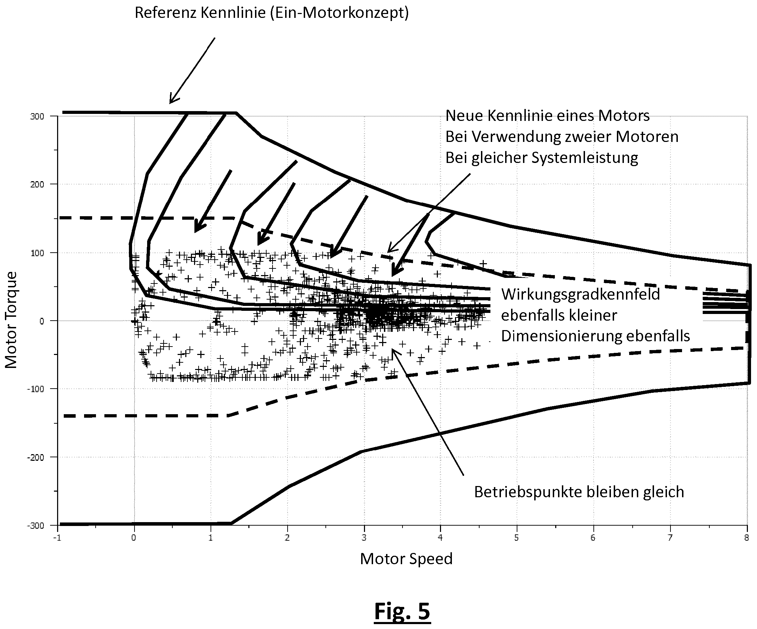

Ein erfindungsgemäßer elektrischer Allrad bedeutet zudem, dass mechanisch beide Achsen unabhängig sind und damit auch nur mit einer Achse gefahren werden kann. Wie in der Fig. 5 gezeigt, verschieben sich die Betriebspunkte zu besseren Wirkungsgraden (durchgehende Referenz Kennlinie zu strichliert gezeichneter neuer Kennlinie), was in normalen Fahrzyklen zu einer erhöhten Effizienz führt.

Bei Verwendung mehrerer angetriebener Achsen kann der / die Elektromotor(en) der Achsen verschieden ausgelegt werden, zum Beispiel:
- Achse 1: Wirkungsgradverbesserung für unteren Drehzahlbereich / Teillastbereich für Stadtfahrt
- Achse 2: Wirkungsgradverbesserung für mittleren Drehzahlbereich / Teillastbereich für Überlandfahrt / Autobahnfahrt
   Oder
- Achse 1: Wirkungsgradverbesserung für motorischen Betrieb (Fahren)
- Achse 2: Wirkungsgradverbesserung für generatorischen Betriebe (Bremsenergierückgewinnung)

Grundlagen des erfindungsgemäßen Verfahrens:
Das erfindungsgemäße Verfahren dient primär dazu, das Wunsch-Drehmoment des Fahrers wirkungsgrad-optimal auf alle Elektromotoren zu verteilen (nachfolgend wird das Betriebsverfahren auch "Betriebsstrategie" genannt).

Nebenbedingung dabei ist: die Drehmomentverteilung geschieht nur zwischen Vorder- und Hinterachse. Sollten an einer Achse mehrere Motoren installiert sein, insbesondere für jedes Rad einzeln, so wird das geforderte Achsdrehmoment auf beide Motoren, links und rechts, gleich verteilt. Drehmomentverteilung bzw. Torque Vectoring zwischen zwei Motoren an einer Achse verursacht durch Fahrdynamik-Regeleingriffe werden hier nicht beschrieben.

Die Betriebsstrategie ist von folgenden Faktoren abhängig:
- Wirkungsgradkennfelder (Getriebe, Motor, Inverter)
- Kupplung offen / geschlossen, daher Schleppmoment an Vorderoder Hinterachse
- Gangwahl bei Mehrganggetrieben (je Achse)

Die verschiedenen Auslegungen und der Freiheitsgrad der Drehmomentverteilung führen damit direkt zur Notwendigkeit einer optimierten Betriebsstrategie. Die Betriebsstrategie muss vorzugsweise abhängig von den Wirkungsgradkennfeldern, der Geschwindigkeit, der Leistungsgrenzen der Komponenten und des Fahrerwunsches die wirkungsgradoptimale Drehmomentaufteilung zwischen den Motoren der Vorder- und Hinterachse finden.

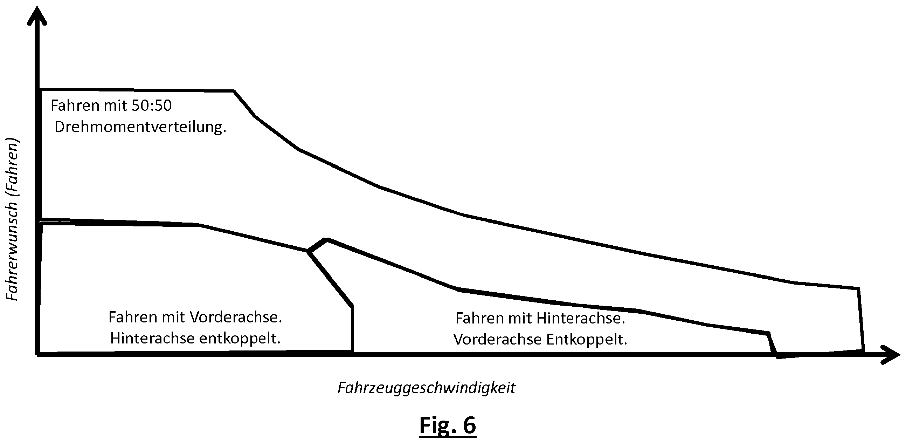

Fig. 6 zeigt beispielhaft eine erfindungsgemäße Betriebsstrategie bzw. ein erfindungsgemäßes Verfahren.

Diese Grafik zeigt vereinfacht für jeden Betriebspunkt (Fahrzeuggeschwindigkeit, Fahrerwunsch-Moment) die Optimale Drehmomentverteilung sowie die Optimale Stellung von Kupplungen (offen, geschlossen) und Gängen (bei Mehrganggetrieben). (Anmerkung: die optimale Gangwahl ist in dieser Grafik nicht veranschaulicht). Hier sind beispielhaft 3 Bereiche dargestellt. Ein reales Kennfeld kann auch wesentlich mehr Bereiche aufweisen. Erfindungsgemäß müssen aber zumindest drei Bereiche definiert werden.

Ermittelt wird dieses Kennfeld mittels Offline-Berechnung unter Verwendung entsprechender Daten für einen Fahrzeugtyp im Vorhinein.

Nun ist es aber vorteilhaft nicht beliebig oft zwischen den Betriebspunkten hin- und her gesprungen wird (ständiges Ein- und Auskuppeln an den Grenzgebieten). Dies könnte zu Einbußen in Dauerfestigkeit und Fahrkomfort führen. Ein erfindungsgemäßes Verfahren kann zur Lösung dieses Problems eingesetzt werden.

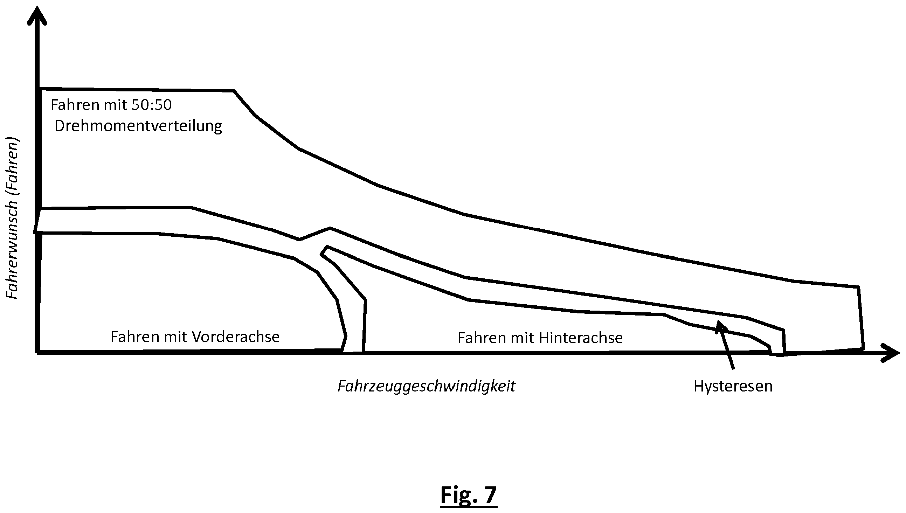

Genauer gibt es zwei Teil-Probleme:
- Pendeln zwischen den Zuständen in Grenzgebieten zwischen den Bereichen bei kleinen Änderungen. Lösung hierfür kann die Einführung von Hysteresen, wie in der Fig. 7 dargestellt, sein. Bei kleinen Überund/oder Unterschreitungen der Bereichsgrenzen (Fahrerwunschmoment und/oder Fahrzeuggeschwindigkeit) erfolgt noch kein Wechsel des Bereiches, sondern erst bei Über- bzw. Unterschreitung einer zur Bereichsgrenze versetzten Hysterese-Kennlinie.
- Häufiger Betriebspunktwechsel (auch bei größeren Änderungen) durch den Fahrer.

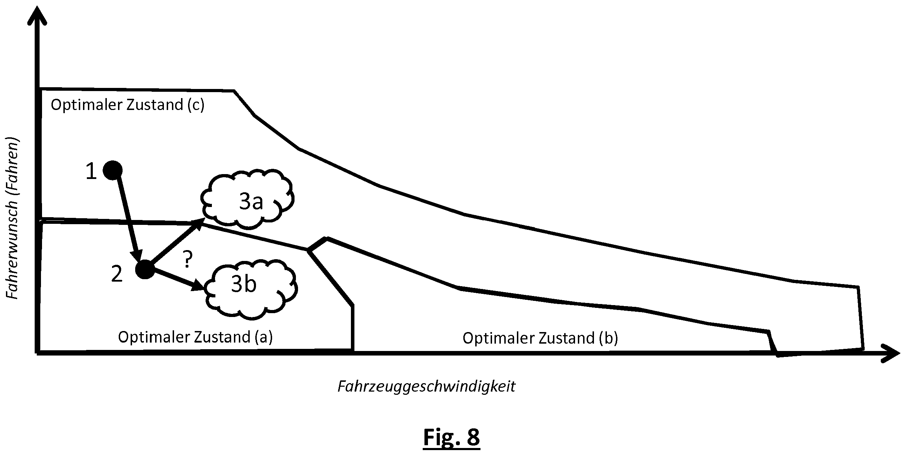

Fig. 8 zeigt beispielhaft 3 mögliche Optimale Zustande. Das Fahrzeug fährt zunächst auf Betriebspunkt 1, wobei zu dieser Zeit der Optimale Zustand (c) im System (im Fahrzeug) eingestellt ist. Im aktuellen Zeitschritt ändert der Fahrer nun seinen Fahrerwunsch und wechselt auf Betriebspunkt 2. In der Theorie ist hier der Zustand (a) optimaler und müsste für ein effizientes Betreiben des Systems eingestellt werden. Allerdings ist die Frage ob dies Sinn macht, oder ob der Fahrer in der nahen Zukunft seinen Betriebspunkt wieder ändert, so dass ein Verbleiben in Zustand (c) sinnvoller wäre um nicht zu häufige Zustandswechsel im Fahrzeug zu haben. Anhand einer Vorausschau soll abgeschätzt werden wo sich der Fahrer in den nächsten X Sekunden befinden wird. Wird er sich in naher Zukunft im Bereich (3a) wieder befinden, macht ein Wechsel des Systemzustandes keinen Sinn. Wird er sich stattdessen in Bereich (3b) aufhalten, macht ein Zustandswechsel von (c) zu (a) Sinn und wird durchgeführt.

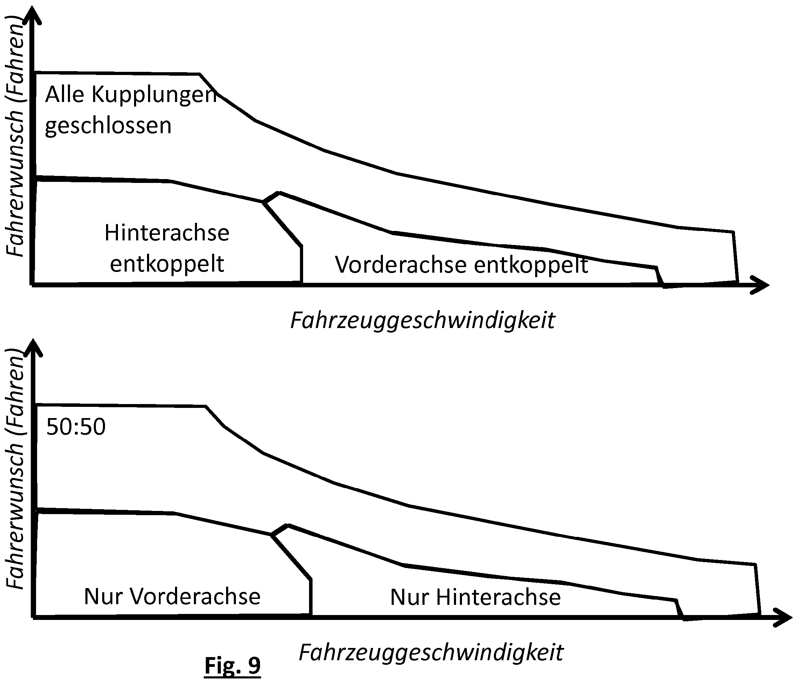

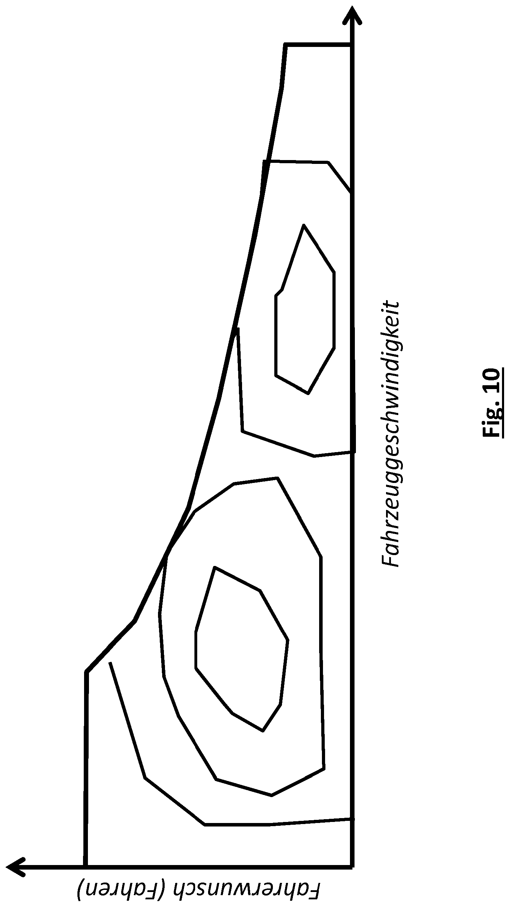

Zur Wahl der richtigen Betriebspunkte:
Ausgangsbasis ist die in Fig. 8 beispielhaft gezeigte optimale Drehmomentverteilung sowie der Kupplungs- und Getriebezustand des Fahrzeuges. Die Analyse ergibt drei Ergebnisse:
- Optimale Kupplungs- und Getriebegang-Wahl = f(Geschwindigkeit, Achsmoment) führt zu Kennfeld 1 (Fig. 9, oben)
- Damit einhergehend, abhängig von der Kupplung / Getriebegang-wahl die Optimale Drehmomentverteilung = f(Geschwindigkeit, Achsmoment) führt zu Kennfeld 2 (Fig. 9, unten)
- Damit einhergehend der höchste Wirkungsgrad des Systems bzw. die Verluste als Vergleichsreferenz = f(Geschwindigkeit, Achsmoment) führt zu Kennfeld 3 (Fig. 10).

Nachfolgend werden diese Kennlinien als Kennlinien eines "Global Optimalen Zustands" bezeichnet.

Ein Beispiel für ein Kennfeld 1 (Variation Kupplungszustand, Getriebegangwahl ist hier nicht dargestellt) im Global optimalen Zustand stellt Fig. 9, oben, dar.

Ein Beispiel für ein Kennfeld 2 im Global optimalen Zustand stellt Fig. 9 (unten) dar.

Ein Beispiel für ein Kennfeld 3 im Global optimalen Zustand stellt Fig. 10 dar.

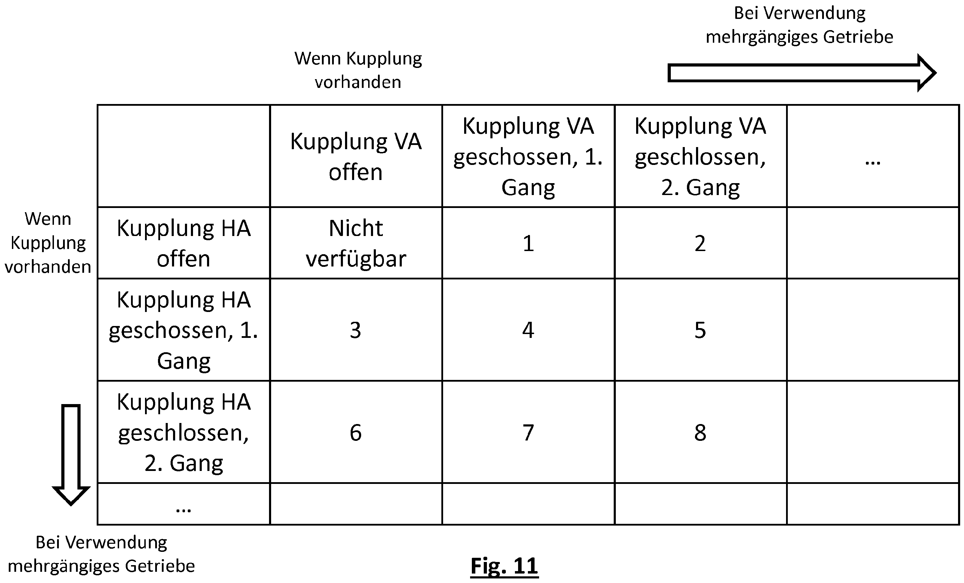

Des Weiteren werden für jeden möglichen Kupplungs- / Getriebezustand Y ebenfalls die optimale Drehmomentverteilung und damit entsprechende Kennfelder für die optimale Drehmomentverteilung = f(Geschwindigkeit, Achsmoment, Systemzustand Y) sowie der Systemwirkungsgrad = f(Geschwindigkeit, Achsmoment, Systemzustand Y) ermittelt, wie in Fig. 11 dargestellt. Dabei bezieht sich HA auf die Hinterachse und VA auf die Vorderachse.

In diesem dargestellten Beispiel (jeweils ein 2-Gang-Getriebe mit Kupplung an Vorder- und Hinterachse) wären beispielhaft 8 Systemzustände (Kupplungs-/Gangwahl Kombinationen) möglich. Abhängig von der Architektur im Fahrzeug kann die Anzahl natürlich variieren. Für jeden dieser möglichen Systemzustände müssen die genannten Kennfelder erzeugt werden.

Für jede dieser Kombinationen wird ebenfalls die optimale Drehmomentverteilung offline ermittelt, sowie der entsprechende Systemwirkungsgrad bzw. Verlust.

Die Kennlinien dieser einzelnen Systemzustände werden nachfolgend als Kennlinien des "Aktuell Optimalen Zustands" bezeichnet.

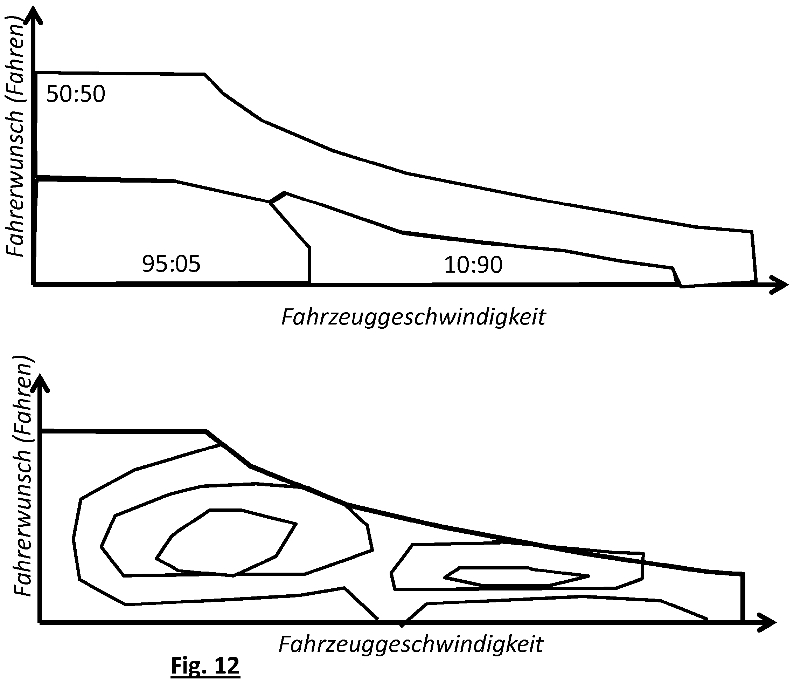

Im Folgenden wird ein Beispiel der Kennfelder für einen dieser Zustände angegeben. Beide Kennfelder müssen für jeden Zustand erstellt werden. Das nicht erfindungsgemäße Beispiel für Kennfeld 2 - optimale Drehmomentverteilung - in einem Zustand X, in dem beide Kupplungen geschlossen sind, ist in Fig. 12 oben dargestellt.

Das nicht erfindungsgemäße Beispiel für Kennfeld 3 - Wirkungsgradkennfeld - im Zustand X, in dem beide Kupplungen geschlossen sind, ist in Fig. 12 unten dargestellt.

Die Berücksichtigung verschiedener Betriebszustände (Kupplungszustände) ist aus folgenden Gründen wichtig: Allrad-Architekturen, bei denen in bestimmten Betriebsbereichen nur mit einer Achse gefahren wird, weisen den Nachteil auf, dass die zweite Achse leer mitläuft, wodurch unter anderem durch den Motor ein Schleppmoment anliegt, was wiederum die Effizienz reduziert. Hier bietet sich die Möglichkeit der Integration von Kupplungen an den Antrieben an, um die Achsen bei Nichtverwendung komplett vom Antriebsstrang zu trennen und damit Schleppverluste zu vermeiden. Diese Ansteuerung der Kupplungen (um z.B. auch zu häufiges Ein- / Auskuppeln zu vermeiden) ist Bestandteil der Betriebsstrategie bzw. eines erfindungsgemäßen Verfahrens.

Mehrgänge für Elektromotoren und damit der Gangwahl-Zustand wird aus folgenden Gründen berücksichtigt: Elektromotoren sind durch ihr Maximalmoment, Maximalleistung sowie Maximaldrehzahl definiert. Mittels Übersetzungen werden diese Bereiche an die Fahrzeuganforderungen (Maximale Fahrzeuggeschwindigkeit, Maximal gewünschte Zugkraft) angepasst. Bei hohen Fahrleistungsanforderungen (hohe Geschwindigkeit, hohe Zugkraft bzw. hohes Beschleunigungsmoment und Anfahrsteigfähigkeit) kann es sein, dass der Betriebsbereich des Elektromotors diese Wünsche nicht abdecken kann (Zielkonflikt: hohes Drehmoment im unteren Drehzahlbereich vs. hohe Drehzahl). Hier wäre zum Beispiel ein Mehrganggetriebe sinnvoll. Auch um teilweise den Betriebspunkt von Elektromotoren in eventuell wirkungsgradbessere Bereiche zu verschieben, kann ein Mehrganggetriebe sinnvoll sein.

Getriebe für Elektromotoren gibt es mit und ohne Zugkraftunterbrechung. Gerade die Schaltung bei Elektromotoren ist ein heikles Fahrbarkeitsthema, da Schaltstöße und Zugkraftunterbrechung während des Schaltens nicht erwartet werden vom Fahrer. Diese Zustandsänderungen von Getrieben sind in einer intelligenten Betriebsstrategie ebenfalls zu integrieren und die Schalthäufigkeit zu minimieren.

Abhängig von dem aktuellen Kupplungs- / Getriebezustand wird der entsprechende "Aktuell optimale Zustand" ausgewählt, sowie dessen optimaler Wirkungsgrad mit dem des "Global optimalen Zustandes" verglichen.

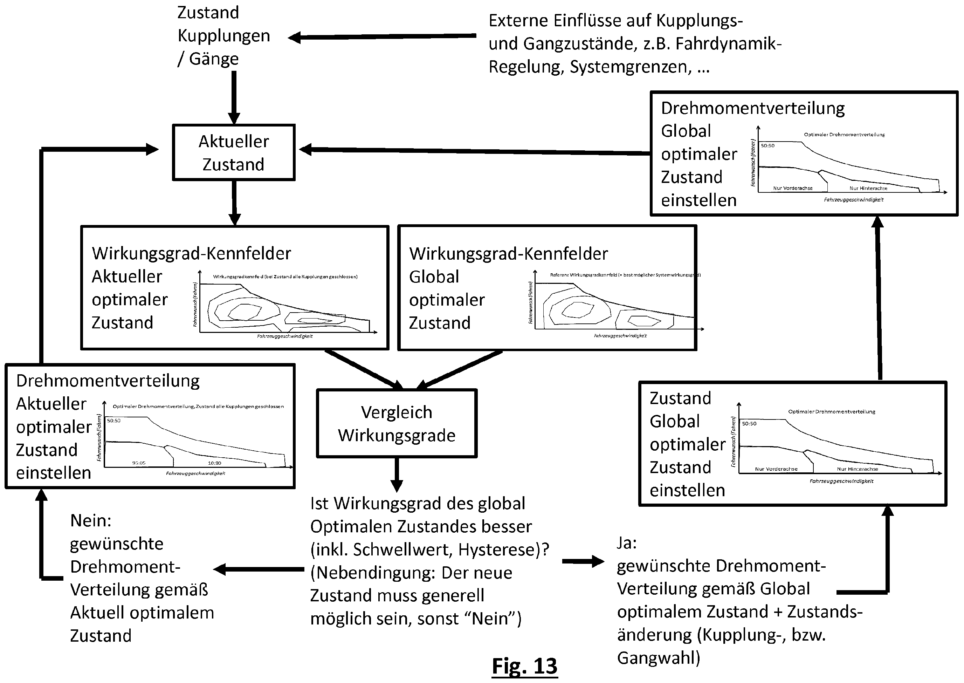

Die Wahl der optimalen Drehmomentverteilung und der Zustandsänderung von Kupplungen erfolgt wie abgebildet in Fig. 13.

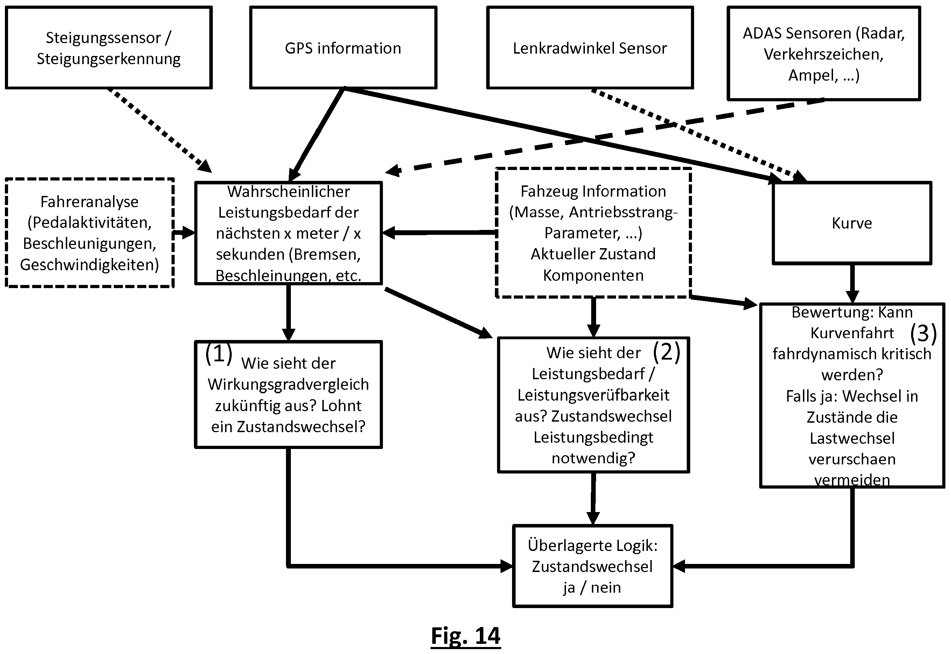

Um dies weiter zu optimieren, bietet sich die Möglichkeit der Koppelung mit einer vorausschauenden Betriebsstrategie für die Ansteuerung der Kupplungen und der Drehmomentverteilung, wie in Fig. 14 skizziert. Unter Verwendung von Streckendaten, sowie Abstandssensoren und Verkehrsschilderkennung können zukünftige Betriebsbereiche vorhergesehen werden. Damit kann unerwünscht zu häufiges hin und her Schalten zwischen Kupplungen, Gängen und Drehmomentverteilungen vermieden werden, was den Fahrkomfort erhöht.

Somit kann zum Beispiel in Kurven ein Zustandswechsel vermieden werden um Lastwechselreaktionen vorzubeugen.

Ebenfalls kann unter Zuhilfenahme von vorausschauenden System sowie einer Fahrerprofilerkennung das Fahrverhalten bzw. der Fahrerwunsch statistisch in den nächsten x Sekunden vorhergeschätzt werden. Hier stellt sich überlagert die Frage, ob auch in naher Zukunft der neue Zustand ebenfalls besser ist und wie sehr besser. Ist dies nicht der Fall bzw. ist die Verbesserung unter einem bestimmten Schwellwert, wird der alte Zustand noch beibehalten. Unnötiges Schalten bzw. Wechsel zwischen zwei Zuständen wird so vermieden.

Unter Fahrerprofilerkennung wird dabei verstanden, wie der Fahrer sich über einen mittleren bis längeren Zeitraum verhält (zum Beispiel Dynamik der Gaspedalaktivität, Sportlich, ruhig, etc.).

Das Verfahren bzw. die in der Steuereinheit des Fahrzeuges eingesetzte Software, kann auch die Möglichkeit bieten, Fahrerprofile automatisch zu erkennen (z.B. effizienter Fahrer, Sportlicher Fahrer).

Die Priorität der überlagerten Logik ist dabei:
- Hoch für (3), um Zustandwechsel in Fahrdynamisch kritischen Situationen zu vermeiden
- Mittel für (2), zur Sicherstellung der Leistungsbereitstellung (Vermeidung von Derating)
- Niedrig für (1), zur Optimierung des Wirkungsgrads

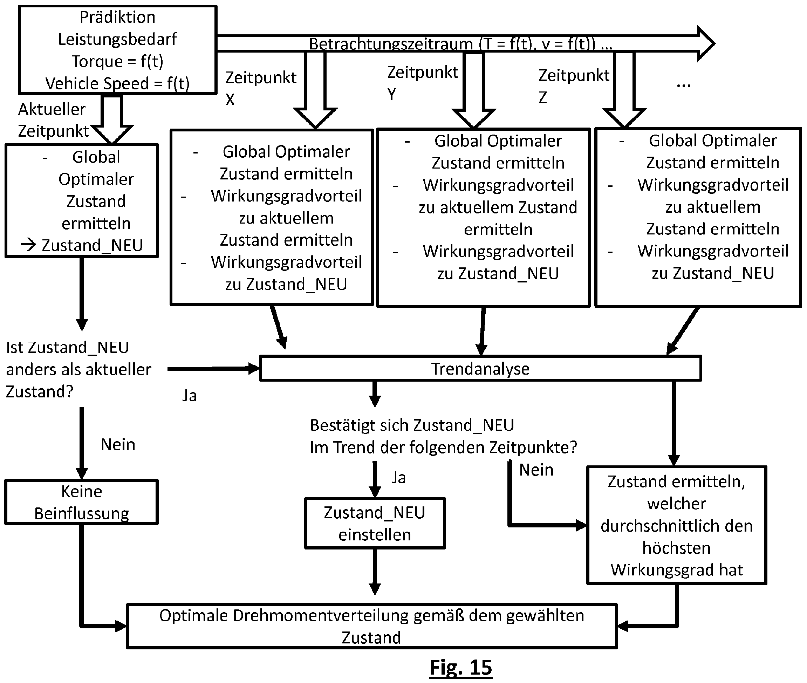

Eine Detailbetrachtung zur Wirkungsgradoptimierung gemäß Block (1) der Fig. 14 ist in Fig. 15 dargestellt.

Zunächst wird geprüft, ob der Zustand zum aktuellen Zeitpunkt gemäß Wirkungsgradanalyse gleich bleiben würde. Ist dies nicht der Fall, kommt die Prädiktion ins Spiel. Anhand einer Trendanalyse wird analysiert, ob ein Zustandswechsel sinnvoll wäre. Bestätigt sich dieser Trend, wird der neue Zustand eingestellt. Ändern sich die Zustände anhand der prädiktiven Trendanalyse zu oft, wird derjenige Zustand ermittelt und eingestellt, bei welchem der höchste durchschnittliche Wirkungsgrad erwartet wird.

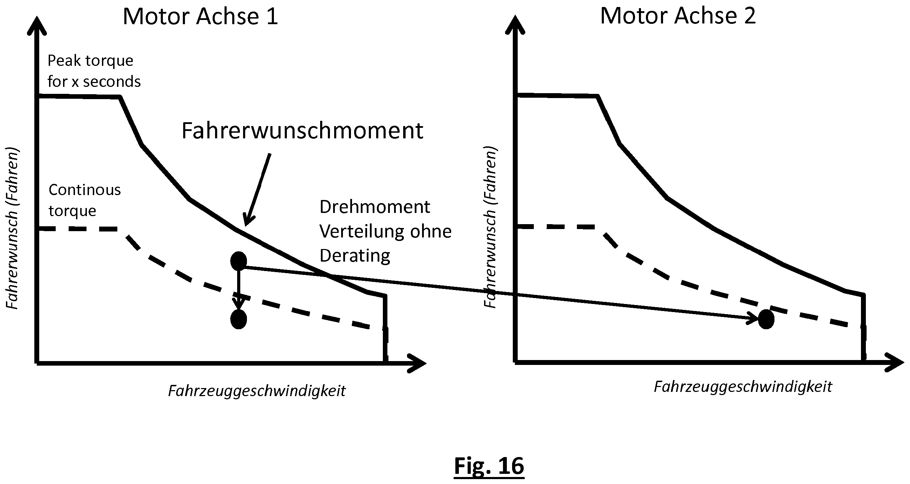

Eine Detailbetrachtung zu Block (2) ist in Fig. 16 dargestellt.

Elektromotoren haben ein unterschiedliches Peak- und Dauer-Drehmoment. Das Peak-Moment steht nur kürzere Zeit zur Verfügung und ist beeinflusst von der lokalen Komponententemperatur. Wird ein Motor über der Dauerleistung betrieben, sinkt nach gewisser Zeit das Peak-Moment (Derating). Die Verwendung mehrerer Motoren bietet die Möglichkeit die Drehmomentverteilung so zu variieren, dass:
- Beide Motoren innerhalb der Dauerleistung betrieben werden, um die Peak-Systemleistung zu erhalten
- Falls sich ein Motor im Derating Zustand befindet, kann das Drehmoment zu einem anderen Motor verteilt werden, um die Erholung des betroffenen Motors zu beschleunigen.

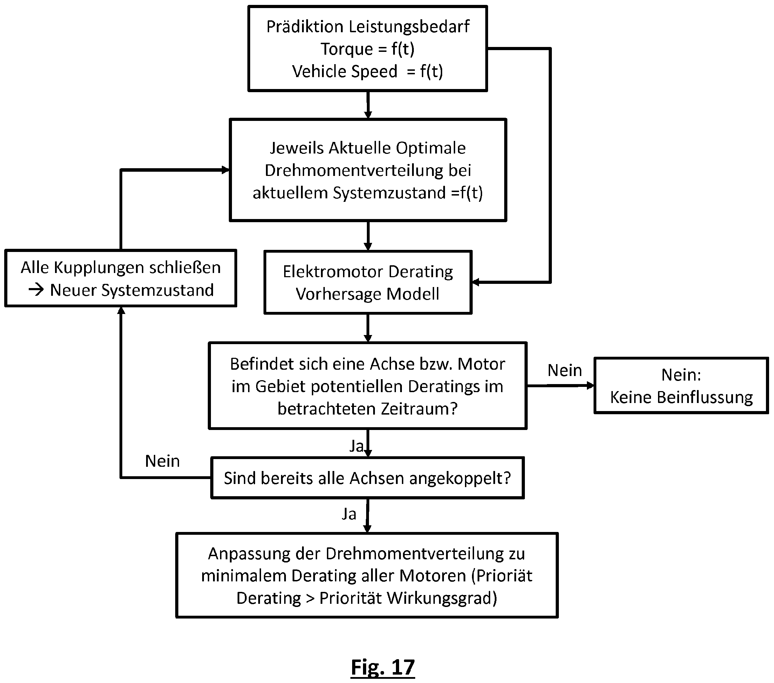

Natürlich kann die Drehmomentverteilung unter Berücksichtigung des Derating auch im Konflikt mit der Gesamteffizienz stehen. So kann es effizienter sein einen Motor über dem Dauer-Moment zu betreiben (was über längere Zeit zu Peformance-Verlust führt) als das Drehmoment auf mehrere Motoren zu verteilen. Auch hier bietet eine vorausschauende Betriebsstrategie sowie eine Fahrererkennung Vorteile zur Lösung des Konfliktes Leistungsbereitstellung vs. Effizienz. Auch dieses Problem überlagert vorzugsweise die Entscheidung der Systemzustände bzw. der Drehmomentverteilung, wie in Fig. 17 näher dargestellt.

Erfindungsgemäß kann daher ein Verfahren zum Betrieb eines elektrisch allradgetriebenen Fahrzeuges folgendes umfassen:
- Verwendung einer wirkungsgradbasierten Betriebsstrategie zur Drehmomentverteilung und zur Kupplungsansteuerung / Gangwahl,
- Verwendung einer vorausschauenden Betriebsstrategie sowie Fahrerprofilerkennung zur Drehmomentverteilung und zur Kupplungsansteuerung / Gangwahl um häufige Wechsel zwischen Betriebszuständen zu vermeiden,
- Berücksichtigung des Derating Verhaltens der Elektroantriebe in der genannten Betriebsstrategie,
- Berücksichtigung des Derating Verhaltens in Kombination mit einer vorrauschauenden Strategie und Fahrerprofilerkennung.

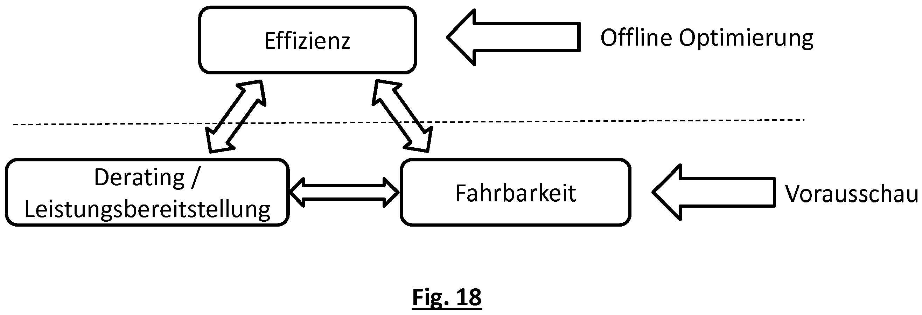

Eine Offline-Optimierung des Betriebsverfahrens betrifft daher, wie in Fig. 18 skizziert, vor allem die Effizient des Fahrzeuges (Wirkungsgrad), vorausschauende Betrachtungen betreffen eine Verbesserung von Fahrbarkeit und Leistungsbereitstellung des Fahrzeuges bzw. Reduzierung von Derating.

## Patentansprüche

1. Verfahren zum Betreiben eines Fahrzeuges, wobei das Fahrzeug zumindest einen ersten und einen zweiten Elektromotor aufweist, wobei durch den ersten Elektromotor eine Vorderachse des Fahrzeuges antreibbar ist und durch den zweiten Elektromotor eine Hinterachse des Fahrzeuges antreibbar ist,
wobei der erste und der zweite Elektromotor mit einem von einem Kennfeld abhängigen Drehmoment betrieben werden, wobei das Kennfeld in Abhängigkeit von einem Fahrerwunschmoment und einer Fahrzeuggeschwindigkeit abgegrenzte Bereiche definiert, mit voneinander diskontinuierlich verschiedenen Drehmomentverteilungen für den ersten und den zweiten Elektromotor, wobei das Kennfeld zumindest drei Bereiche definiert, wobei in einem ersten Bereich ausschließlich der erste Elektromotor aktiviert ist und in einem zweiten Bereich ausschließlich der zweite Elektromotor aktiviert ist und in einem dritten Bereich beide Elektromotoren aktiviert sind, **dadurch gekennzeichnet, dass** wenn ein Motor deaktiviert wird, dieser mittels Kupplung vom Antriebsstrang getrennt wird, so dass eine nicht angetriebene Achse ausgekuppelt ist und vom Antriebsstrang getrennt ist, so dass im ersten Bereich ausschließlich die Vorderachse angetrieben wird, im zweiten Bereich ausschließlich die Hinterachse angetrieben wird, im dritten Bereich beide Achsen angetrieben werden.

2. Verfahren nach Anspruch 1,
**dadurch gekennzeichnet, dass** im dritten Bereich beide Elektromotoren annähernd je zur Hälfte aktiviert sind.

3. Verfahren nach Anspruch 1,
**dadurch gekennzeichnet, dass** unterhalb eines vorgegebenen geringen Fahrerwunschmoments, bei geringer Fahrzeuggeschwindigkeit der erste Bereich realisiert wird, in dem der erste Elektromotor aktiviert ist und bei mittlerer Fahrzeuggeschwindigkeit der zweite Bereich realisiert wird, in dem der zweite Elektromotor aktiviert ist und bei großer Fahrzeuggeschwindigkeit der dritte Bereich realisiert wird, in dem der erste und der zweite Elektromotor aktiviert sind.

4. Verfahren nach Anspruch 1 oder 3,
**dadurch gekennzeichnet , dass** oberhalb eines vorgegebenen großen Fahrerwunschmoments, bei jeder Fahrzeuggeschwindigkeit der dritte Bereich realisiert wird, in dem der erste und der zweite Elektromotor aktiviert sind.

5. Verfahren nach zumindest einem der vorhergehenden Ansprüche, **dadurch gekennzeichnet , dass** zumindest ein Übergang zwischen Bereichsgrenzen des Kennfeldes dadurch realisiert wird, dass ein Elektromotor auf ein neues Betriebsdrehmoment gesetzt wird und/oder dass eine Änderung eines Ganges eines Schaltgetriebes erfolgt.

6. Verfahren nach zumindest einem der vorhergehenden Ansprüche, **dadurch gekennzeichnet , dass** der Betriebsbereich des ersten und/oder zweiten Elektromotors abhängig von dem Kennfeld nur dann geändert wird, wenn eine zusätzliche Plausibilitätsprüfung positiv ausfällt.

7. Verfahren nach Anspruch 6,
**dadurch gekennzeichnet , dass** die zusätzliche Plausibilitätsprüfung eine Hysterese des Fahrerwunschmomentes des Kennfeldes darstellt.

8. Verfahren nach Anspruch 6 oder 7,
**dadurch gekennzeichnet , dass** die zusätzliche Plausibilitätsprüfung eine zeitliche Vorausschau beinhaltet, beispielsweise durch Verwendung von GPS Informationen über die bevorstehende Route und/oder durch Analyse der Fahrzeugumgebung, wie zum Beispiel Verkehrsschilderkennung oder Verwendung von ADAS Sensoren und/oder durch Analyse von Fahrzeugdaten wie Steigungssensoren oder Lenkwinkelsensoren.

9. Verfahren nach einem der Ansprüche 6 bis 8,
**dadurch gekennzeichnet , dass** die zusätzliche Plausibilitätsprüfung einen Wirkungsgradvergleich beinhaltet zwischen einem Wirkungsgrad bei Änderung des Bereiches des Kennfeldes und einem Wirkungsgrad ohne Änderung des Bereiches des Kennfeldes.

10. Verfahren nach einem der Ansprüche 6 bis 9,
**dadurch gekennzeichnet , dass** die zusätzliche Plausibilitätsprüfung ein mögliches Derating des ersten und/oder zweiten Elektromotors berücksichtigt.

11. Fahrzeug, wobei das Fahrzeug zumindest einen ersten und einen zweiten Elektromotor aufweist, wobei durch den ersten Elektromotor mittels schaltbarer Kupplung eine Vorderachse des Fahrzeuges antreibbar ist und durch den zweiten Elektromotor mittels schaltbarer Kupplung eine Hinterachse des Fahrzeuges antreibbar ist, wobei das Fahrzeug eine Steuereinheit umfasst, wobei die Steuereinheit dazu eingerichtet ist, ein Verfahren nach zumindest einem der vorhergehenden Ansprüche auszuführen.

## Claims

1. Method for operating a vehicle, wherein the vehicle comprises at least one first and one second electric motor, wherein a front axle of the vehicle can be driven by the first electric motor, and a rear axle of the vehicle can be driven by the second electric motor, wherein the first and the second electric motors are operated using a torque, which is dependent upon a characteristic map, wherein the characteristic map defines areas, which are delimited depending on a driver-requested torque and a vehicle speed, which areas have torque distributions for the first and the second electric motors, which are discontinuously different from one another, wherein the characteristic map defines at least three areas, wherein, in a first area, the first electric motor is activated exclusively and, in a second area, the second electric motor is activated exclusively and in a third area both electric motors are activated, **characterized in that**, when a motor is deactivated, it is disconnected from the drive train by means of a clutch, so that a non-driven axle is decoupled and is disconnected from the drive train, so that, in the first area, the front axle is driven exclusively, in the second area, the rear axle is driven exclusively, and in the third area, both axles are driven.

2. Method according to Claim 1, **characterized in that**, in the third area, both electric motors are activated, each one approximately by half.

3. Method according to Claim 1, **characterized in that**, below a predefined low driver-requested torque, at a slow vehicle speed, the first area is implemented, in which the first electric motor is activated and, at a moderate vehicle speed, the second area is implemented, in which the second electric motor is activated and, at a high vehicle speed, the third area is implemented, in which the first and the second electric motors are activated.

4. Method according to Claim 1 or 3, **characterized in that**, above a predefined high driver-requested torque, at any vehicle speed, the third area is implemented, in which the first and the second electric motors are activated.

5. Method according to at least one of the preceding claims, **characterized in that** at least one transition between area boundaries of the characteristic map is implemented by way of an electric motor being set to a new operating torque and/or by way of a change in a gear of a shiftable transmission taking place.

6. Method according to at least one of the preceding claims, **characterized in that** the area of the operation of the first and/or second electric motor is changed, depending on the characteristic map, only when an additional plausibility check has a positive result.

7. Method according to Claim 6, **characterized in that** the additional plausibility check represents a hysteresis of the driver-requested torque of the characteristic map.

8. Method according to Claim 6 or 7, **characterized in that** the additional plausibility check includes a temporal prediction, for example, by the use of GPS information regarding the intended route and/or by an analysis of the vehicle surroundings, for example by recognizing traffic signs or the use of ADAS sensors, and/or by analysing vehicle data such as slope sensors or steering angle sensors.

9. Method according to one of Claims 6 to 8, **characterized in that** the additional plausibility check includes an efficiency comparison between an efficiency which would result if the area of the characteristic map were changed and an efficiency which would result if the area of the characteristic map were not changed.

10. Method according to one of Claims 6 to 9, **characterized in that** the additional plausibility check accounts for a possible derating of the first and/or the second electric motor.

11. Vehicle, wherein the vehicle comprises at least one first and one second electric motor, wherein a front axle of the vehicle can be driven by the first electric motor by means of a shiftable clutch, and a rear axle of the vehicle can be driven by the second electric motor by means of a shiftable clutch, wherein the vehicle comprises a control unit, wherein the control unit is designed for carrying out a method according to at least one of the preceding claims.

## Revendications

1. Procédé pour faire fonctionner un véhicule, le véhicule possédant au moins un premier et un deuxième moteur électrique, un essieu avant du véhicule pouvant être entraîné par le premier moteur électrique et un essieu arrière du véhicule pouvant être entraîné par le deuxième moteur électrique,
le premier et le deuxième moteur électrique fonctionnant avec un couple qui dépend d'un diagramme caractéristique, le diagramme caractéristique définissant des plages délimitées en fonction d'un couple souhaité par le conducteur et une vitesse du véhicule, avec des distributions du couple différentes discontinues les unes des autres pour le premier et le deuxième moteur électrique,
le diagramme caractéristique définissant au moins trois plages, seul le premier moteur électrique étant activé dans une première plage et seul le deuxième moteur électrique étant activé dans une deuxième plage et les deux moteurs électriques étant activés dans une troisième plage,
**caractérisé en ce que** lorsqu'un moteur est désactivé, celui-ci est séparé du groupe motopropulseur au moyen d'un embrayage, de sorte qu'un essieu non entraîné est débrayé et séparé du groupe motopropulseur, de sorte que dans la première plage, seul l'essieu avant est entraîné, dans la deuxième plage, seul l'essieu arrière est entraîné, dans la troisième plage, les deux essieux sont entraînés.

2. Procédé selon la revendication 1, **caractérisé en ce que** dans la troisième plage, les deux moteurs électriques sont activés approximativement chacun pour moitié.

3. Procédé selon la revendication 1, **caractérisé en ce qu'**au-dessous d'un faible couple prédéfini souhaité par le conducteur, la première plage, dans laquelle le premier moteur électrique est activé, est réalisée dans le cas d'une faible vitesse du véhicule et la deuxième plage, dans laquelle le deuxième moteur électrique est activé, est réalisée dans le cas d'une vitesse moyenne du véhicule et la troisième plage, dans laquelle le premier et le deuxième moteur électrique sont activés, est réalisée dans le cas d'une grande vitesse du véhicule.

4. Procédé selon la revendication 1 ou 3, **caractérisé en ce qu'**au-dessus d'un couple élevé prédéfini souhaité par le conducteur, la troisième plage, dans laquelle le premier et le deuxième moteur électrique sont activés, est réalisée à chaque vitesse du véhicule.

5. Procédé selon l'une des revendications précédentes, **caractérisé en ce qu'**au moins une transition entre les limites de plage du diagramme caractéristique est réalisée **en ce qu'**un moteur électrique est réglé sur un nouveau couple de fonctionnement et/ou **en ce qu'**un changement d'un rapport d'une boîte de vitesses est effectué.

6. Procédé selon l'une des revendications précédentes, **caractérisé en ce que** la plage de fonctionnement du premier et/ou du deuxième moteur électrique qui dépend du diagramme caractéristique n'est modifiée que lorsqu'un contrôle de plausibilité supplémentaire produit un résultat positif.

7. Procédé selon la revendication 6, **caractérisé en ce que** le contrôle de plausibilité supplémentaire représente une hystérésis du couple souhaité par le conducteur du diagramme caractéristique.

8. Procédé selon la revendication 6 ou 7, **caractérisé en ce que** le contrôle de plausibilité supplémentaire contient une prévision temporelle, par exemple en utilisant des informations GPS à propos de l'itinéraire à venir et/ou par l'analyse de l'environnement du véhicule, comme par exemple la reconnaissance des panneaux de circulation ou l'utilisation de capteurs ADAS et/ou par l'analyse de données de véhicule comme des capteurs de pente ou des capteurs d'angle de direction.

9. Procédé selon l'une des revendications 6 à 8, **caractérisé en ce que** le contrôle de plausibilité supplémentaire contient une comparaison de rendement entre un rendement en cas de modification de la plage du diagramme caractéristique et un rendement sans modification de la plage du diagramme caractéristique.

10. Procédé selon l'une des revendications 6 à 9, **caractérisé en ce que** le contrôle de plausibilité supplémentaire tient compte d'une réduction de puissance possible du premier et/ou du deuxième moteur électrique.

11. Véhicule, le véhicule possédant au moins un premier et un deuxième moteur électrique, un essieu avant du véhicule pouvant être entraîné par le premier moteur électrique au moyen d'un embrayage commutable et un essieu arrière du véhicule pouvant être entraîné par le deuxième moteur électrique au moyen d'un embrayage commutable, le véhicule comportant une unité de commande, l'unité de commande étant conçue pour mettre en oeuvre un procédé selon au moins l'une des revendications précédentes.
